# EUROPÄISCHE PATENTSCHRIFT

(11) **EP 2 569 380 B1**
(45) Veröffentlichungstag und Bekanntmachung des Hinweises auf die Patenterteilung: **12.08.2015**
(21) Anmeldenummer: 11730173.9
(22) Anmeldetag: 10.05.2011
(51) Int. Cl.: C09D 11/10

(54) **TINTENSTRAHLDRUCKTINTE**
INK-JET PRINTER INK
ENCRE D'IMPRESSION À JET D'ENCRE

(30) Priorität: 10.05.2010 AT 7882010
(43) Veröffentlichungstag der Anmeldung: 20.03.2013
(73) Patentinhaber: Durst Phototechnik Digital Technology GmbH, 9900 Lienz (AT)
(72) Erfinder: KAPPAUN, Stefan, A-8522 Gross Sankt Florian (AT)
(74) Vertreter: Burger, Hannes
(86) Internationale Anmeldenummer: PCT/AT2011/000221
(87) Internationale Veröffentlichungsnummer: WO 2011/140577

(56) Entgegenhaltungen:
- EP-A1- 2 053 100
- EP-A1- 2 230 283
- WO-A1-2009/053751
- WO-A1-2009/118250
- US-A1- 2006 187 285

## Beschreibung

Die Erfindung betrifft eine Tintenstrahldrucktinte umfassend polymerisierbare Monomere und/oder Oligomere und gegebenenfalls zumindest einen Initiator.

UV-Tinten für Inkjet-Anwendungen haben in den letzten Jahren zahlreiche neue Applikationsgebiete erschlossen, wobei insbesondere die Vorteile der raschen Trocknung durch UV-Bestrahlung, die Vielfalt an geeigneten Substraten sowie ökologische und ökonomische Aspekte eine entscheidende Motivationsgrundlage für Tintenentwicklungstätigkeiten darstellten. In diesem Zusammenhang wurde ein Großteil der Entwicklungsarbeiten von Inkjet-Tinten auf Basis von Acrylaten und Methacrylaten durchgeführt, da die zugehörigen Tintenbestandteile, wie Dispergiermittel, quellfähige und reaktive Monomere, funktionalisierte Harze, usw., kommerziell und im industriellen Maßstab verfügbar sind sowie vollständig charakterisiert vorliegen. Durch die Vielzahl an zur Verfügung stehenden Acrylaten und Methacrylaten ist es beispielsweise möglich, über eine gezielte Mischung von Tinteriinhaltsstoffen die Haftungseigenschaften auf unterschiedlichen Substraten zu steuern, die Beständigkeit gegenüber Abrasion und Lösungsmitteln zu kontrollieren oder die Flexibilität von gehärteten Tintenschichten zu beeinflussen. Zudem weisen Acrylate und Methacrylate unter Zusatz von geeigneten Initiatorsystemen (z.B. UV-Initiatoren oder thermischen Initiatoren) eine schnelle Aushärtung auf, weshalb der weitverbreitete Einsatz dieser Monomere nicht verwunderlich ist (z.B. in Large-Format Inkjet-Druckern, Zahnersatzmaterialien, Lacksystemen, usw.).

Trotz des häufigen Gebrauches derartiger Monomere kommt es zu zunehmender Kritik an Acrylaten und Methacrylaten, zumal diese meist einen unangenehmen Geruch vor als auch nach der Härtung zeigen, Augen, Haut und Atmungsorgane reizen können, der Energieaufwand zur vollständigen Härtung relativ groß ist, Tinten als auch gehärtete Tintenschichten leicht entflammbar sind sowie nur eingeschränkte Biokompatibilität (z.B. bei Verwendung als Knochenersatz, Zahnersatz, Implantate, usw.) besteht. Obwohl diese Nachteile, insbesondere im Bereich der Biokompatibilität, partiell durch den Einsatz von Methacrylaten anstelle von Acrylaten verbessert werden konnten, was wiederum den Einsatz als z.B. Knochenersatz, Zahnersatz oder Implantate ermöglicht, zeigen Methacrylate generell eine niedrigere Härtungsgeschwindigkeit bzw. weisen häufig weitere der oben angeführten Nachteile auf. Es besteht somit ein großer Bedarf an alternativen Monomersystemen.

Der vorliegenden Erfindung liegt die Aufgabe zugrunde, alternative Monomersysteme für die Herstellung von Inkjet-Tinten zu beschreiben.

Diese Aufgabe wird einerseites durch die einleitend genannte Tintenstrahldrucktinte, bei der die Monomere und/oder Oligomere zumindest zu 65 Gew.-%, vorzugsweise ausschließlich, durch zumindest eine, bevorzugt radikalisch polymerisierbare, vinylbasierende Verbindung gebildet sind, oder die Monomere und/oder Oligomere zumindest teilweise, bevorzugt ausschließlich, durch zumindest eine vinylbasierende Verbindung gebildet sind und der Initiator durch Monomere gebildet ist, die mit der zumindest einen vinylbasierenden Verbindung im Zuge deren Polymerisation unter Ausbildung einer kovalenten Bindung zu dieser reagieren, und andererseits durch die Verwendung zumindest einer Vinylverbindung aus der Gruppe umfassend Vinylester, Vinylcarbonate, Vinylcarbamate, sowie Derivate davon und Mischungen daraus, zur Herstellung einer Tintenstrahldrucktinte die zu zumindest zu 65 Gew.-%, vorzugsweise ausschließlich, durch zumindest eine vinylbasierende Verbindung, insbesondere Vinylester, Vinylcarbonate, Vinylcarbamate sowie Derivate davon und Mischungen daraus, gebildet ist, gelöst.

Von Vorteil ist dabei, dass diese Monomere bzw. Oligomere ähnliche Härtungs-, Haftungs- und Stabilitätseigenschaften wie die bisher verwendeten Acrylate oder Methacrylate aufweisen können, jedoch die Nachteile des unangenehmen Geruches, der Reizwirkung auf Augen, Haut und Atmungsorgane, des großen Energiebedarfes zur Härtung, der leichten Entflammbarkeit zumindest großteils umgehen. Zudem weisen diese Monomere bzw. Oligomere eine größere mechanische Beständigkeit und signifikant größere Biokompatibilität auf und sind für die Herstellung von Tintenstrahldrucktinten für unterschiedlichste Einsatzgebiete geeignet, darunter zum Beispiel Graphiktinten, Tinten für den 3D-Tintenstrahldruck von Implantaten, Knochen und Zahnersatz oder Spezialtinten zur Applikation von Sicherheitsmerkmalen auf Verpackungen, medizinischen Geräten, usw. Durch den Einsatz des genannten copolymersierbaren Initiators für Tintenstrahldruck-Anwendungen wird der Vorteil erreicht, dass dieser vollständig in das polymere Netzwerk der vinylbasierenden Verbindungen, insbesondere der Vinylester, Vinylcarbonate und Vinylcarbamate, eingebaut werden kann, womit das fertige Druckbild bzw. der fertige Druck zumindest großteils keine extrahierbaren Initiatorabbauprodukte enthält. Letzteres ist insbesondere für Anwendungen im Verpackungsbereich oder zur Realisierung von Implantaten, Knochen- oder Zahnersatz von Bedeutung, da Initiatorabbauprodukte z.B. zu Reizreaktionen führen können. Von besonderem Vorteil ist auch, dass die vinylbasierenden Verbindungen diverse Funktionen, darunter die Wirkung als Tensid, Bindemittel, Harz, Reagenz zur Sicherstellung der Substratanhaftung, etc., übernehmen können.

Die vinylbasierende Verbindung bzw. Mischungen aus mehreren vinylbasierenden Verbindungen können in einem Lösungsmittel oder einer Lösungsmittelmischung enthalten sein. Ebenso besteht die Möglichkeit, dass zumindest eine der vinylbasierenden Verbindungen, beispielsweise ein Vinylester, das Lösungsmittel bzw. Dispersions- oder Emulsionsmittel für die weiteren Komponenten der Tintenstrahldrucktinte bildet.

Der verwendete copolymerisierbare Initiator ist vorzugsweise ein Fotoinitiator.

Die Monomere und/oder Oligomere können auch durch zumindest zu 70 Gew.-%, insbesondere 80 Gew.-%, durch zumindest eine, bevorzugt radikalisch polymerisierbare, vinylbasierende Verbindung gebildet sein, falls andere Monomere oder Oligomere, beispielsweise nichtreaktive, in der Tintenstrahldrucktinte verwendet werden, beispielsweise als Füllstoff oder für eine Nachhärtung nach der Haupthärtung unmittelbar nach dem Drucken, wobei es in diesem Fall auch möglich ist, dass diese Monomere oder Oligomere nicht in das Netzwerk, das von den, insbesondere selbstvernetzenden, vorzugsweise radikalisch selbstvernetzenden, vinylbasierenden Verbindungen gebildet wird, eingebaut werden.

Die Monomere und/oder Oligomere werden der Tintenstrahldrucktinte insbesondere in einem Gesamtanteil zugesetzt, der aus einem Bereich von 15 Gew.-% bis 99 Gew.-% ausgewählt ist. Unterhalb von 15 Gew.-% ist zwar noch eine Härtung der formulierten Tinte möglich, jedoch ist die mechanische Beständigkeit der erhaltenen Tintenschichten für praktische Anwendungen unzureichend. Oberhalb von 99 Gew.-% kann keine weitere Verbesserung im Hinblick auf die Stabilität oder Abriebsfestigkeit der Tinte festgestellt werden.

Die Monomere und/oder Oligomere können der Tintenstrahldrucktinte auch in einem Gesamtanteil zugesetzt werden, der aus einem Bereich von 25 Gew.-% bis 90 Gew.-% oder aus einem Bereich von 25 Gew.-% bis 70 Gew.-% ausgewählt ist.

Zur Realisierung von farblosen Tinten ("Varnish") werden bevorzugt Formulierungen mit einem größeren Gesamtgewichtsanteil an diesen Monomeren bzw. Oligomeren verwendet, der aus einem Bereich von 80 Gew.-% bis 99 Gew.-% ausgewählt ist. Diese Tintenstrahldrucktinten weisen meist keinen Pigment- oder Farbstoffanteil auf, sodass der Anteil an den Monomeren oder Oligomeren erhöht werden kann, wodurch das Druckbild bessere mechanische Eigenschaften aufweisen kann.

Bevorzugt werden als vinylbasierende Verbindungen Verbindungen aus der Gruppe bestehend aus Vinylestern, Vinylcarbonaten, Vinylcarbamaten, sowie Derivaten davon und Mischungen daraus eingesetzt. Insbesondere diese Vinylverbindungen haben sich in Hinblick auf den Ersatz der (Meth)acrylate als besonders vorteilhaft in Hinblick auf die mechanischen Eingenschaften des Druckbildes, inbesondere die Abbriebbeständigkeit, sowie die Verarbeitbarkeit der Tinten in Hinblick auf die Haftfestigkeit des Druckbildes und die Härtezeiten herausgestellt. Weiters weisen diese Verbindungen vorteilhafte Eigenschaften im Bereich der Biokompatibilität auf.

Eine weitere Verbesserung dieser Eigenschaften der Tintenstrahldrucktinte bzw. des Druckbildes konnte erreicht werden, indem mehrere vinylbasierende Verbindungen aus einer Mischung von Vinylbutyrat, Vinylneodecanoat, Vinylstearat, Vinylbenzoat, Vinyllaurat und N-Vinylcaprolactam, oder gemäß einer anderen Ausführungsvariante der Tintenstrahldrucktinte mehrere vinylbasierende Verbindungen aus einer Mischung von Vinylneodecanoat, Vinylbenzoat, Vinyllaurat, Vinylcarbonat-funktionalisiertes Furfuryl und N-Vinylcaprolactam oder gemäß einer weiteren Ausführungsvariante der Tintenstrahldrucktinte mehrere vinylbasierende Verbindungen aus einer Mischung von Vinylneodecanoat, Vinylbenzoat, Vinyllaurat, Vinylcarbonat-funktionalisiertes 3-Morpholino-1,2-propandiol und Vinylcarbonat-funktionalisiertes Furfuryl verwendet werden, wobei gemäß einer Ausführungsvariante der Erfindung die mehreren vinylbasierenden Verbindungen in zumindest annähernd äquimolaren Anteilen in der Tintenstrahldrucktinte enthalten sind.

Weiters kann die zumindest eine vinylbasierende Verbindung neben der Vinylgruppe zumindest eine nicht vinylische zusätzliche funktionelle Gruppe aufweisen, die bevorzugt durch einen Glykolrest oder durch eine Furfuryl-Gruppe gebildet ist. Weitere mögliche Gruppen sind Morpholine, Bisphenole, Alkyle, usw., wie sie weiter unten bei der eigenständigen Synthese von vinylbasierenden Verbindungen beschrieben werden. Insbesondere ist die zumindest eine vinylbasierende Verbindung hinsichtlich des Vinylierungsgrades mono-, di-, tri-, tetra-, penta- oder hexafunktionalisiert. Es kann damit eine Verbesserung in Hinblick auf die Tintenrheologie, wie die Oberflächenspannung oder die Viskosität, und eine Verbesserung der Substratanhaftung erreicht werden. Zudem kann damit auch der Vernetzungsgrad bei der Härtung besser kontrolliert werden. Weiters ist damit auch eine Steuerung der physikalischen Eigenschaften gehärteter Tintenschichten, wie z.B. der mechanische Abrieb, die Lösungsmittelbeständigkeit, die Polarität, etc. erreichbar. Der besondere Vorteil daran ist, dass durch die zusätzliche Funktionalisierung keine weiteren Zusatzstoffe bzw. ein geringerer Anteil an weiteren Zusatzstoffen zur Tintenstahldrucktinte erforderlich ist, sodass aufgrund der kovalenten Einbindung der Tinteninhaltsstoffe eine weitere Verbesserung der Biokompatibilität der Tintenstahldrucktinte durch eine Verringerung an möglichen extrahierbaren Inhaltsstoffen erreichbar ist.

Zur weiteren Verbesserung der Dispergierbarkeit der Inhaltsstoffe der Tintenstrahldrucktinte kann diese zumindest ein Tensid in einem Anteil ausgewählt aus einem Bereich von 0,5 Gew.-% bis 25 Gew.-% enthalten. Unterhalb von 0,5 Gew.-% konnte keine Verbesserung dieser Eigenschaft beobachtet werden. Oberhalb von 25 Gew.-% wird hingegen die Benetzbarkeit der zu bedruckenden Oberfläche, wenn diese nicht saugend ist, verschlechtert. Zudem wirken sich höhere Anteile an Tensid nachteilig auf die Trocknungsgeschwindigkeit der Tinte aus.

Das Tensid kann auch in einem Anteil ausgewählt aus einem Bereich von 1,5 Gew.-% bis 20 Gew.-% bzw. in einem Anteil ausgewählt aus einem Bereich von 1,5 Gew.-% bis 15 Gew.-% enthalten sein.

Die Tintenstrahldrucktinte kann zumindest einen Entschäumer in einem Anteil ausgewählt aus einem Bereich von 0,1 Gew.-% bis 10 Gew.-% enthalten, wobei die obere Grenze von 10 Gew.-% sicherstellt, dass unerwünschte Substratbenetzungsphänomene vermieden werden. Der Entschäumer kann auch in einem Anteil ausgewählt aus einem Bereich von 0,5 Gew.-% bis 8 Gew.-% bzw. in einem Anteil ausgewählt aus einem Bereich von 1,5 Gew.-% bis 5 Gew.-% enthalten sein.

Wie voranstehend ausgeführt, kann die Tintenstrahldrucktinte zur Verkürzung bzw. Auslösung der Polymerisation der Monomere bzw. Oligomere zumindest einen Initiator, insbesondere einen Fotoinitiator, aufweisen. Der Initiator kann in einem Anteil ausgewählt aus einem Bereich von 0,1 Gew.-% bis 25 Gew.-% enthalten sein und ist bevorzugt ein Derivat des Di- und Triacryloylhydroxylamins oder ein Derivat des Diacrylamids. Unterhalb von 0,1 Gew.-% wurde zwar ein verbessernder Effekt beobachtet, allerdings nur in einem geringen Umfang. Oberhalb von 25 Gew.-% kann zwar die Kratzfestigkeit des Druckbildes weiter verbessert werden, allerdings führt eine weitere Erhöhung des Initiatorgehaltes zu einer deutlichen Kostenvergrößerung, die durch den damit erreichten Vorteil nicht aufgewogen wird.

Der Initiator kann auch in einem Anteil ausgewählt aus einem Bereich von 1,5 Gew.-% bis 20 Gew.-% bzw. in einem Anteil ausgewählt aus einem Bereich von 1,5 Gew.-% bis 15 Gew.-% enthalten sein.

Gemäß einer Ausführungsvariante dazu kann ein Anteil des Initiators durch zumindest einen weiteren Fotoinitiator und/oder thermischen Initiator ersetzt sein, der durch Moleküle gebildet ist, die nach der Polymerisation der zumindest einen vinylbasierenden Verbindung ungebunden in der Tinte verbleiben. Es können also photoinitiierende Monomere als Mischung mit üblicherweise in Tinten verwendeten UV- und/oder thermischen Initiatoren in der erfindungsgemäßen Tinte eingesetzt werden. Durch diese Initiatormischungen kann eine Vergrößerung des Vernetzungsgrades der Tintenstrahldrucktinte erreicht werden. Gleichzeitig werden dadurch aber auch die Mengen an kommerziellen UV- und/oder thermischen Initiatoren verringert werden, was wiederum eine Minimierung von Initiatorabbauprodukten in den gehärteten Tintenschichten ermöglicht.

Entsprechend einer anderen Ausführungsvariante der vorliegenden Erfindung können auch nur kommerzielle Fotoinitiatoren und/oder thermische Initiatoren eingesetzt werden, d.h. ohne die Beimischung von kovalent einbindbaren Initiatoren.

Zum besseren Verständnis der Erfindung wird diese anhand der nachfolgenden Beschreibung und Beispiele näher erläutert.

Einführend sei festgehalten, dass Einzelmerkmale oder Merkmalskombinationen aus den beschriebenen unterschiedlichen Ausführungsbeispielen für sich eigenständige, erfindungsgemäße Lösungen darstellen können. Des weiteren sind die folgenden Ausführungen zur Zusammensetzung der Tintenstrahltinte so zu verstehen, dass die Tintenstrahltinte neben der oder den vinylbasierenden Verbindung(en) diese Zusatzstoffe, wie Tenside, Entschäumer, Pigmente, Farbstoffe, Initiatoren, umfasst bzw. in Kombination mit der oder den vinylbasierenden Verbindung(en) daraus besteht, jeweils in einem Anteil ausgewählt aus den im folgenden genannten Bereichen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Bei den im Inkjet-Druck eingesetzten Tinten handelt es sich gewöhnlich um UV-, thermisch oder mittels Elektronenstrahlen härtbare Tintenmischungen, die zumeist aus Trägerflüssigkeiten, Tensiden, Bindemitteln, Farbstoffen und Pigmenten aufgebaut sind.

Die Herstellung von Tinten für Inkjet-Anwendungen erfolgt üblicherweise in mehrstufigen bzw. voneinander getrennten Prozessschritten. Hier stellt meist die Pigmentvermahlung und Realisierung der zugehörigen Pigmentdispersion einen separaten aber sehr kritischen Produktionsschritt dar, jedoch kann auch die Formulierung der Volltinte, d.h. die Zugabe von reaktiven Monomeren, Viskositätsreglern, Bindemitteln, Initiatoren, etc., in mehreren Stufen ablaufen. Die angewandten Formulierungsprozeduren bzw. die dabei eingesetzten Geräte entsprechen dem jeweiligen Stand der Technik. Um an dieser Stelle unnötige Wiederholungen zu vermeiden, sei auf die einschlägige Fachliteratur verwiesen.

In diesem Zusammenhang beschreibt diese Erfindung zuerst den Einsatz von Monomeren oder Oligomeren, die ausschließlich aus zumindest einer vinylbasierenden Verbindung gebildet werden, insbesondere von Vinylestern und/oder Vinylcarbonaten und/oder Vinylcarbamaten bzw. Derivate daraus oder Mischungen davon, als Tintenbasis für die Herstellung von Tintenstrahldrucktinten, bevor diese vinylbasierenden Verbindungen mit zusätzlichen funktionellen Gruppen (z.B. Glykolreste, Furfurylreste, Morpholinreste, Bisphenolreste, Alkylreste, usw.) zur Steuerung der Tintenrheologie, Substratanhaftung, Tintenbeständigkeit, usw., vorgestellt werden.

Unter dem Begriff "vinylbasierende Verbindung" wird im Sinne der Erfindung eine chemische Verbindung verstanden, die zumindest eine Vinylgruppe im Molekül aufweist. Insbesondere werden darunter Vinylester, Vinylcarbonate und Vinylcarbamate bzw. Derivate davon und Mischungen daraus verstanden.

Jeweils hinsichtlich des Vinylierungsgrades monofunktionelle Vinylester, Vinylcarbonate und Vinylcarbamate können durch folgende Strukturformeln beschrieben werden:
Vinylester:

   R-COO-CH=CH₂
Vinylcarbonate:

   R-OCOO-CH=CH₂
Vinylcarbamate:

   R,R'N-COO-CH=CH₂

Debei stehen die Reste R und R' insbesondere für Glykolreste, Furfurylreste, Morpholinreste, Bisphenolreste, Alkylreste bzw. den Gruppen, wie sie im nachstehend zur eigenständigen Synthese von vinylbasierenden Verbindungen beschrieben werden.

Neben diesen monofunktionellen vinylbasierenden Verbindungen können auch mehrfach hinsichtlich des Vinylierungsgrades funktionalisierte Vinylester, Vinylcarbonate und Vinylcarbamate eingesetzt werden, bevorzugt di-, tri-, tetra-, penta- oder hexafunktionalisierte, wobei zusätzliche Vinylgruppen endständig oder in einer Seitenkette im Molekül angeordnet sein können. Beispiele hierfür sind Vinylester, Vinylcarbonate und Vinylcarbamte hergestellt aus 1,6-Hexandiol, 1,3-Propandiol, 2-Benzyloxy-1,3-propandiol, uvm., wie sie als Produkte der nachstehend beschriebenen eigenständigen Synthese von vinylbasierenden Verbindungen hervorgehen.

Die Erfindung zeichnet sich im Vergleich zu klassischen acrylatischen oder methacrylatischen Systemen dadurch aus, dass mit den vinylbasierenden Monomeren bzw. daraus gebildeten Oligomeren ebenfalls rasch härtende Tinten realisierbar sind (vergleichbar zu Acrylat- oder Methacrylat-Tinten), die Biokompatibilität der Tinte bzw. des Druckes, insbeondere bei Verwendung von Vinylestern, Vinylcarbonaten und Vinylcarbamaten, deutlich größer ist (je nach Monomer bis zu 100-fach größere Biokompatibilität), der Geruch der Tinten und Tintenschichten verringert werden kann sowie - je nach Tintenzusammensetzung-Tintenschichten mit vorteilhaften mechanischen Eigenschaften erhalten werden (z.B. bis zu 2-fach größeres Elastizitätsmodul, vergleichbare Härte wie bei Acrylat- oder Methacrylat-Tinten, etc.).

Die erfindungsgemäße Tintenstrahldrucktinte kann bis zu 99 Gew.-% aus zumindest einer vinylbasierenden Verbindung, insbesondere zumindest einem Vinylester, zumindest einem Vinylcarbonat oder zumindest einem Vinylcarbamat sowie Derivaten davon, wobei auch Mischungen der einzelnen Materialklassen möglich sind, bestehen, bzw. ist es möglich, dass davon, wie dies bereits voranstehend beschrieben wurde, ein Anteil bis zu 35 Gew.-%, insbesondere 30 Gew.-%, vorzugsweise 20 Gew.-%, durch nicht vinylbasierende Monomere bzw. Oligomere ersetzt ist.

Weiters können die erfindungsgemäßen Tintenstrahldrucktinten diverse Farbstoffe und/oder Pigmente in Anteilen bis zu 45 Gew.-%, Tenside bis zu 25 Gew.-%, Entschäumer bis 10 Gew.-% sowie Initiatoren (UV-Initiatoren und/oder thermische Initiatoren) in Anteilen bis zu 10 Gew.-% enthalten bzw. aus diesen Inhaltsstoffen neben der oder den vinylbasierenden Verbindung(en) bestehen.

Bevorzugt werden die erfindungsgemäßen Tinten mittels kommerzieller Produkte realisiert, darunter z.B. Vinyl-4-tert-butylbenzoat, Vinylcinnamat, Vinylcrotonat, Vinyldecanoat, Vinylpivalat, Vinyltrifluoroacetat, Vinylacetat, Vinylpropionat, Vinylbutyrat, Vinylneodecanoat, Vinylstearat, Vinylbenzoat, Vinyllaurat, welche von Anbietern wie Sigma-Aldrich bezogen werden können.

Neben diesen kommerziellen Verbindungen finden in den erfindungsgemäßen Tinten auch eigenständig synthetisierte vinylbasierende Verbindungen Anwendung, welche durch den Umsatz von Alkoholen, Kohlenhydraten, Glykolen, Polyestern, Carbonsäuren, Fettsäuren, Aminen, Aminosäuren, Proteinen, Polyurethanen, Silikonen, etc. mit entsprechenden Reagenzien, wie sie in den nachfolgend angeführten Literaturstellen beschrieben sind, insbesondere zu Vinylestern, Vinylcarbonaten und Vinylcarbamaten umgesetzt werden können. Die dabei eingesetzten Synthesevorschriften sind in einschlägiger Fachliteratur hinreichend beschrieben, beispielsweise in Hurd, C. D.; Roach, R.; Huffman, C. W. J. Am. Chem. Soc. 1956, 78, 104, oder in Lobell, M.; Schneider, M. P. Synthesis 1994, 375. oder in Lee, T. Y.; Guymon, C. A.; Jonsson, E. S.; Hait, S.; Hoyle, C. E. Macromolecules 2005, 38, 7529, oder in Atta, A. M.; El-Saeed, S. M.; Farag, R. K. React. & Funct. Polym. 2006, 66, 1596, oder in der WO 200100634 A1, oder in Rohr, M.; Geyer, C.; Wandeler, R.; Schneider, M. S.; Murphy, E. F.; Baiker, A. Green Chemistry 2001, 3, 123.

Bevorzugt werden zur Synthese der korrespondierenden Vinylester, Vinylcarbonate und Vinylcarbamate Ausgangsmaterialien eingesetzt, welche in der Tinte besondere Wirkung entfalten, wie z.B. als Viskositätsregler, Tenside, Entschäumer, Dispergierhilfsmittel, Haftungsverbesserer, usw. In diesem Zusammenhang werden insbesondere Ethylenglykole, Propylenglykole, Neopentylglykole, 1,1'-Methylene-di(2-naphthol), 1,1,1-Tris(4-hydroxyphenyl)ethan, 1,14-Tetradecandiol, 1,2,4-Benzentriol, 1,2-Benzendimethanol, 1,2-Decandiol, 1,2-Pentandiol, 1,2-Tetradecandiol, 1,3-Dioxan-5,5-dimethanol, 1,3-Propandiol, 1,4-Bis(2-hydroxyisopropyl)benzen, 1,5-Hexadien-3,4-diol, 1,6-Dihydroxynaphthalen, 1,6-Hexandiol, 1-(2-Nitrophenyl)-1,2-ethandiol, 1-(Benzyloxymethyl)tri(ethylenglykol), 1-[N,N-Bis(2-hydroxyethyl)amino]-2-propanol, 2,2'-(o-Phenylendioxy)diethanol, 2,2'-Biphenyldimethanol, 2,2'-Bipyridin-3,3'-diol, 2,2,3,3,4,4,5,5-Octafluoro-1,6-hexandiol, 2,2,4-Trimethyl-1,3-pentandiol, 2,2-Bis(bromomethyl)-1,3-propandiol, 2,2-Bis(hydroxymethyl)buttersäure, 2,3,5,6-Tetramethyl-p-xylen-α,α'-diol, 2,3-Dibromo-1,4-butandiol, 2,3-Dichloro-5,8-dihydroxy-1,4-naphthoquinon, 2,4-Dimethyl-2,4-pentandiol, 2,5-Dibromohydroquinon, 2,5-Dihydroxy-1,4-benzoquinon, 2,5-Dimethylresorcinol, 2,6-Dihydroxy-4-methyl-3-pyridincarbonitril, 2,7-Dimethyl-3,5-octadiyne-2,7-diol, 2-(Bromomethyl)-2-(hydroxymethyl)-1,3-propandiol, 2-Benzyloxy-1,3-propandiol, 2-Hydroxyethyldisulfid, 2-Hydroxymethyl-1,3-propandiol, 2-Methyl-1,3-propandiol, 2-Methylen-1,3-propandiol, 2-Nitroresorcinol, 2-Phenyl-1,2-propandiol, 3',5'-Dihydroxyacetophenon, 3,3'-(Ethylenedioxy)diphenol, 3,3,3',3'-Tetramethyl-1,1'-spirobiindan-5,5',6,6'-tetraol, 3,3-Dimethyl-1,2-butandiol, 3-(4-Methoxyphenoxy)-1,2-propandiol, 3-Bromo-1,2-propandiol, 3-Cyclohexen-1,1-dimethanol, 3-Ethoxy-1,2-propandiol, 3-Fluorocatechol, 3-Hexyne-2,5-diol, 3-Methoxy-1,2-propandiol, 3-Methyl-1,3,5-pentantriol, 3-Morpholino-1,2-propandiol, 3-Phenoxy-1,2-propandiol, 3-Piperidino-1,2-propandiol, 4,4'-Dihydroxybenzophenon, 4,4'-Isopropyliden-bis[2-(2,6-dibromophenoxy)ethanol], 4,4'-Isopropylidendicyclohexanol, 4,6-Dinitropyrogallol, 4-Amino-4-(3-hydroxypropyl)-1,7-heptandiol, 4-Bromo-3,5-dihydroxybenzosäure, 4-tert-Butylcalix[4]arene, 5-Chloro-2,3-pyridindiol, 7,8-Dihydroxy-6-methoxycoumarin, 7-Octen-1,2-diol, Anthrarufin, Bis(2-hydroxyethyl)terephthalat, Chlorohydroquinon, Di(trimethylolpropan), Diethyl-2,5-dihydroxyterephthalat, Diethyl-bis(hydroxymethyl)malonat, Hydrobenzoin, Hydroquinon-bis(2-hydroxyethyl)ether, Methyl-3,4,5-trihydroxybenzoat, N,N,N',N'-Tetrakis(2-Hydroxypropyl)ethylendiamin, Nitromethantrispropanol, Pentaerythritol, Tetrafluorohydroquinon, Triisopropanolamin, 1,3,5-Cyclohexantriol, 1,2-Cyclopentandiol, tert-Butylhydroquinon, 1,2-Cyclohexandiol, 1,4-Dioxan-2,3-diol, 2,3-Dibromo-2-buten-1,4-diol, trans-p-Menth-6-en-2,8-diol, 2,2'-Biphenol, 3,3',5,5'-Tetrabromobisphenol A, 4,4'-(1,3-Phenylendiisopropyliden)bisphenol, 4,4'-(1,4-Phenylendiisopropyliden)bisphenol, 4,4'-(1-Phenylethyliden)bisphenol, 4,4'-(9-Fluorenyliden)diphenol, 4,4'-(Hexafluoroisopropyliden)diphenol, 4,4'-Cyclohexylidenbisphenol, 4,4'-Ethylidenbisphenol, 4,4'-Isopropylidenbis(2,6-dimethylphenol), 4,4'-Dihydroxybiphenyl, 4,4'-Methylenbis(2,6-di-tert-butylphenol), 4,4'-Sulfonylbis(2-methylphenol), 4,4'-Sulfonyldiphenol, 4,4'-Thiodiphenol, Bis[4-(2-hydroxyethoxy)phenyl]sulfon, Bisphenol A, ethoxyliertes Bisphenol A, propoxyliertes Bisphenol A, Bisphenol C, 1,2,4,5-Benzentetracarboxamid, 1,2-Diaminocyclohexan, 1,3-Cyclohexanbis(methylamin), 1,4-Diaminoanthraquinon, 1,5-Diamino-2-methylpentan, 1,9-Diaminononan, 2,2'-(Ethylendioxy)bis(ethylamin), 2,2-Dimethyl-1,3-propandiamin, 2,3,5,6-Tetramethyl-p-phenylendiamin, 2,4,6-Trimethyl-m-phenylendiamin, 2,4,8,10-Tetraoxaspiro[5.5]undecan-3,9-dipropanamin, 2,4-Diaminotoluen, 2,5-Dichloro-p-phenylendiamin, 2,5-Dimethyl-1,4-phenylendiamin, 2,6-Diaminopurin, 2,6-Diaminotoluen, 2-Aminophenyldisulfid, 3,3'-Methylendianilin, 3,4'-Oxydianilin, 3,4-Diaminobenzophenon, 4,4'-(1,1'-Biphenyl-4,4'-diyldioxy)dianilin, 4,4'-(1,3-Phenylendiisopropyliden)bisanilin, 4,4'-(1,3-Phenylendioxy)dianilin, 4,4'-(1,4-Phenylendiisopropyliden)bisanilin, 4,4'-(4,4'-Isopropylidendiphenyl-1,1'-diyldioxy)dianilin, 4,4'-(Hexafluoroisopropyliden)bis(p-phenylenoxy)dianilin, 4,4'-(Hexafluoroisopropyliden)dianilin, 4,4'-Diaminobenzophenon, 4,4'-Diaminooctafluorobiphenyl, 4,4'-Methylenbis(cyclohexylamin), 4,4'-Diaminobenzanilid, 4,4'-Methylen-bis(2-chloroanilin), 4,4'-Methylenbis(2,6-diethylanilin), 4,4'-Methylenbis(2,6-dimethylanilin), 4,7,10-Trioxa-1,13-tridecandiamin, 4,9-Dioxa-1,12-dodecandiamin, 4-Aminophenyldisulfid, 4-Chloro-o-phenylendiamin, 5,5'-(Hexafluoroisopropyliden)di-o-toluidin, 6-Chloro-3,5-diamino-2-pyrazincarboxamid, Dytek®-EP-diamin, Poly(1,4-butandiol)bis(4-aminobenzoat), Tris(2-aminoethyl)amin, p-Xylylendiamin, 1,4,8,11-Tetraazacyclotetradecan-5,7-dion, 1,4,8,12-Tetraazacyclopentadecan, 1,5,9-Triazacyclododecan, Cyclen, N,N'-Diisopropyl-1,3-propandiamin, N,N'-Diisopropylethylendiamin, N,N'-Diphenyl-p-phenylendiamin, N,N'-Diethyl-2-buten-1,4-diamin, N,N'-Dimethyl-1,3-propandiamin, 1-[Bis[3-(dimethylamino)propyl]amino]-2-propanol, 2-[2-(Dimethylamino)ethoxy]ethanol, 1,1-Cyclohexandiessigsäure, 1,2,3,4-Butantetracarbonsäure, 1,2,3-Triazol-4,5-dicarbonsäure, 1,3,5-Cyclohexantricarbonsäure, 1,3-Acetondicarbonsäure, 1,3-Adamantandiessigsäure, 1,3-Cyclohexandicarbonsäure, 1,4-Naphthalendicarbonsäure, 1,4-Phenylendipropionsäure, 2,2'-Bipyridin-4,4'-dicarbonsäure, 2,2'-Iminodibenzoesäure, 2,3-Dibrombutandisäure, 2,5-Dihydroxyterephthalsäure, 2,6-Dimethyl-3,5-pyridindicarbonsäure, 2,6-Naphthalendicarbonsäure, 2-(2-Methoxyethoxy)essigsäure, 2-Bromoterephthalsäure, 2-Methoxyisophthalsäure, 2-[2-(2-Methoxyethoxy)ethoxy]essigsäure, 3,4-Dihydroxyhydrozimtsäure, 3-Fluorophthalsäure, 3-Phenylglutarsäure, 3-Thiophenmalonsäure, 4,4'-Oxybis(benzoesäure), 4,4'-Sulfonyldibenzoesäure, 4,5-Dichlorophthalsäure, 4-Methylphthalsäure, 5-(Octadecyloxy)isophthalsäure, 5-tert-Butylisophthalsäure, 6-Methylpyridin-2,3-dicarbonsäure, 1,7-Heptandicarbonsäure, Benzylmalonsäure, Biphenyl-4,4'-dicarbonsäure, Bis(carboxymethyl)trithiocarbonat, Butylmalonsäure, Chlorobutandisäure, Cyclohexylbutandisäure, Dibromomaleinsäure, Diethylmalonsäure, Dodecandisäure, Ethylmalonsäure, Hexadecandisäure, 2-Methyl-2-butendisäure, Perfluoroglutarsäure, Phenylmalonsäure, Terephthalsäure, Tetrafluorophthalsäure, Undecanedisäure, p-Terphenyl-4,4"-dicarbonsäure, 1,6-Hexandisäure, etc. eingesetzt.

Wie aus den genannten Ausgangsmaterialien abgeleitet werden kann, können die erhaltenen Vinylester, Vinylcarbonate und Vinylcarbamate bzgl. ihres Vinylierungsgrades sowohl mono-, di-, tri-, tetra-, penta- oder hexafunktionalisiert sein. Höher funktionalisierte Vinylester, Vinylcarbonate und Vinylcarbamate werden genutzt, um den Vernetzungsgrad der Tinte zu steuern. Damit kann z.B. die mechanische Beständigkeit, die Lösungsmittelbeständigkeit, usw. beeinflusst werden.

Diese Ausgangsmaterialien bzw. teilweise auch davon abgeleitete kommerzielle Vinylester, Vinylcarbonate und Vinylcarbamate können von kommerziellen Anbietern bezogen werden, beispielsweise Sigma-Aldrich, Fluka, ABCR, etc.

Neben den genannten Verbindungen können auch alle anderen zur Synthese von Vinylestern, Vinylcarbonaten und Vinylcarbamaten geeigneten Alkohole, Kohlenhydrate, Glykole, Polyester, Carbonsäuren, Fettsäuren, Amine, Aminosäuren, Proteine, Polyurethane, Silikone, etc. Verwendung finden.

In speziellen Fällen ist es auch möglich, wasserlösliche Vinylester, Vinylcarbonate und Vinylcarbamate herzustellen, wenn die verwendeten Ausgangsmaterialien einen hinreichend großen Alkoxylierungsgrad aufweisen, also einen Alkoxylierungsgrad von zumindest zwei Ethylenglykol- oder Propylenglykolgruppen, vorzugsweise drei bis zwölf Ethylenglykol- oder Propylenglykolgruppen aufweisen.

Alle voranstehend genannten Verbindungen können sowohl als Reinkomponente als auch in beliebigen Mischungen zur Formulierung von Tintenstrahldrucktinten eingesetzt werden.

Die erfindungsgemäße Tintenstrahldrucktinte wird insbeosndere aus Vinylestern, Vinylcarbonaten und/oder Vinylcarbamaten in einem Gesamtanteil formuliert, der ausgewählt ist aus einem Bereich mit einer unteren Grenze von 15 Gew.-% und einer oberen Grenze von 99 Gew.-%. Formulierungen mit Gewichtsanteilen an Vinylestern und/oder Vinylcarbonaten und/oder Vinylcarbamaten von 80 Gew.-% bis 99 Gew.-% werden vornehmlich zur Realisierung von farblosen Tinten ("Varnish") eingesetzt. Es sei hier angemerkt, dass, obwohl ein Gesamtgehalt der zumindest einen vinylbasierenden Verbindung an der Tintenstrahldrucktinte von 99 Gew.-% möglich ist, bei Verwendung von Vinylestern und/oder Vinylcarbonaten und/oder Vinylcarbamaten oberhalb von 90 Gew.-% in der Tintenstrahldrucktinte keine weitere Verbesserung im Hinblick auf die Stabilität oder Abriebsfestigkeit der Tintenstrahldrucktinte festgestellt werden kann.

Neben der Funktion als Bindemittel und der Bildung der Matrix, d.h. des Tintennetzwerkes, können die vinylbasierenden Verbindungen, insbesondere die Vinylester, Vinylcarbonate und Vinylcarbamate, dabei auch diverse andere Funktionen übernehmen, darunter die Wirkung als Tensid, als Reagenz zur Sicherstellung der Substratanhaftung, etc.

Beispiele für vinylbasierende Verbindungen mit Tensid- und dispergierender Wirkung sind Glykol- oder Polyester-funktionalisierte Vinylester, Vinylcarbonate und Vinylcarbamate.

Beispiele für vinylbasierende Verbindungen mit Entschäumerwirkung sind Silikonfunktionalisierte Vinylester, Vinylcarbonate und Vinylcarbamate.

Beispiele für vinylbasierende Verbindungen mit die Viskosität regelnder Wirkung sind Glykol-, Polyester- und Polyurethan-funktionalisierte Vinylester, Vinylcarbonate und Vinylcarbamate.

Beispiele für vinylbasierenden Verbindungen mit haftungsverbessernder Wirkung sind Morpholin-, Glykol- oder Furfuryl-funktionalisierte Vinylester, Vinylcarbonate und Vinylcarbamate.

Als farbgebende Komponente werden in den erfindungsgemäßen Tintenstrahldrucktinten Pigmente und/oder Farbstoffe eingesetzt, welche sowohl einzeln als auch als Mischung in die Tinte eingebracht werden können. Bei den Pigmenten und Farbstoffen handelt es sich vornehmlich um organische Materialien, jedoch können auch anorganische Spezialpigmente oder Füllstoffe (z.B. Titanoxide, Hydroxyapatite, usw.) zum Einsatz kommen. Derartige Pigmente und Farbstoffe sind aus dem einschlägigen Stand der Technik bekannt, beispielsweise unter der Bezeichnung CMYK-Farbmodell.

Die Pigmente und Farbstoffe bzw. beliebige Mischungen daraus können in einem Anteil von 0.2 Gew.-% bis 45 Gew.-%, insbesondere 2,5 Gew.-% bis 30 Gew.-%, in der erfindungsgemäßen Tintenstrahldrucktinte enthalten sein.

Die Pigmente und Farbstoffe sind kommerziell verfügbar.

Als weiteren Bestandteil kann die erfindungsgemäße Tintenstrahldrucktinte zumindest einen Fotoinitiator, insbesondere zumindest einen UV-Initiator, und/oder einen thermischen Initiator enthalten. Beispiele hierfür sind diverse Irgacure® Initiatoren, diverse Darocure® Initiatoren, Phenone, Benzoine, usw. beziehungsweise Azobisisobutyronitril, 1,1'-Azobis(cyclohexancarbonitril), t-Butylhydroperoxid, m- Chloroperbenzoesäure, Dibenzoylperoxid, Di-t-butylperoxid, usw. Die in diesem Zusammenhang eingesetzten Initiatoren entsprechen dem jeweiligen Stand der Technik, weshalb auf einschlägige Fachliteratur verwiesen sei.

Dieser Initiator bzw. eine Initiatormischung daraus kann in einem Anteil von 0.2 Gew.-% bis 10 Gew.-%, insbesondere 0,5 Gew.-% bis 8 Gew.-%, enthalten sein.

Diese Initiatoren sind kommerziell erhältlich und können beispielsweise von Sigma-Aldrich, CIBA, Fluka, usw. bezogen werden.

Ebenso kann in der erfindungsgemäßen Tintenstrahldrucktinte zumindest ein weiteres Tenside enthalten sein, welches zum Unterschied zu voranstehenden genannten vinylbasierenden Verbindungen mit Tensidfunktion nicht kovalent in das Tintennetzwerk eingebunden werden. Als Tenside können anionische, kationische, nichtionische oder ampholytische Tenside oder deren Mischungen verwendet werden.

Beispiele für anionische Tenside sind Carboxylat-, Sulfat-, Phosphat- oder Sulfonat-Gruppen aufweisende Tenside, wie zum Beispiel Aminsäurederivate, Fettalkoholethersulfate, Fettalkoholsulfate, Seifen, Alkylphenolethoxylate, Fettalkoholethoxylate, aber auch Alkansulfonate, Olefinsulfonate oder Alkylphosphate. Beispiele für nichtionische Tenside sind Ethoxylate, wie zum Beispiel ethoxylierte Additionsprodukte von Alkoholen, wie beispielsweise Polyoxyalkylenpolyole, Amine, Fettsäuren, Fettsäureamide, Alkylphenole, Ethanolamide, Fettamine, Polysiloxane oder Fettsäureester, aber auch Alkyl- oder Alkylphenylpolyglykolether, wie zum Beispiel Fettalkoholpolyglykolether, oder Fettsäureamide, Alkylglykoside, Zuckerester, Sorbitanester, Polysorbate oder Trialkylaminoxide, aber auch Ester und Amide aus Poly(meth)acrylsäuren mit Polyalkylenglykolen oder Aminopolyalkylenglykole, die allenfalls einseitig mit Alklygruppen abgeschlossen sein können. Beispiele für kationische Tenside sind quaternäre Ammonium-oder Phosphoniumverbindungen, wie zum Beispiel Tetraalkylammoniumsalze, N,N-Dialkylimidazolinverbindungen, Dimethyldistearylammoniumverbindungen, oder N-Alkylpyridinverbindungen, insbesondere aber Ammoniumchloride. Zu den ampholytischen Tensiden gehören amphotere Elektrolyte, so genannte Ampholyte, wie zum Beispiel Aminocarbonsäuren und Betaine.

Der Anteil dieser Tenside kann ausgewählt sein aus einem Bereich von 0.5 Gew.-% bis 25 Gew.-%, insbesondere aus einem Bereich von 1,5 Gew.-% bis 20 Gew.-% bzw. aus einem Bereich von 1,5 Gew.-% bis 15 Gew.-%.

Derartige Tenside sind kommerziell breit erhältlich und können z.B. von Sigma-Aldrich bezogen werden.

Da diverse Tintenmischungen aus Vinylestern, Vinylcarbonaten und Vinylcarbamaten im Inkjet-Prozess zur Schaumbildung neigen können, wird der erfindungsgemäßen Tintenstrahldrucktinte bei Bedarf zumindest ein Entschäumer auf Silikonbasis zugesetzt, beispielsweise kommerziell erhältliche Silikonöle oder Poly(dimethylsiloxan). Bevorzugt wird die Entschäumermenge in der Tintenformulierung auf ein Mindestmaß reduziert, um unerwünschte Substratbenetzungsphänomene zu vermeiden.

Der zumindest eine Entschäumer kann in einem Gesamtanteil von 0.1 Gew.-% bis 10 Gew.-% oder in einem Gesamtanteil von 0,5 Gew.-% bis 8 Gew.-% bzw. in einem Gesamtanteil von 1,5 Gew.-% bis 5 Gew.-% beigemengt sein.

Der Bezug dieser Entschäumer ist z.B. von CIBA oder Sigma-Aldrich möglich.

In den auf Basis von vinylbasierenden Verbindungen, insbeondere auf Basis von Vinylestern und/oder Vinylcarbonaten und/oder Vinylcarbamaten, formulierten Tintenstrahldrucktinten können auch neuartige, fotoinitiierende Monomere als "UV-Initiatoren" eingesetzt werden. Diese Verbindungen, welche z.B. von Derivaten des Di- und Triacryloylhydroxylamins oder Derivaten des Diacrylamids abgeleitet sind, werden in der für Initiatoren einschlägigen Literatur hinreichend beschrieben, z.B. in Lee, T. Y.; Guymon, C. A.; Jonsson, E. S.; Hait, S.; Hoyle, C. E. Macromolecules 2005, 38, 7529, oder in Karasu, F.; Dworak, C.; Kopeinig, S.; Hummer, E.; Arsu, N.; Liska, R. Macromolecules 2008, 41, 7953, oder in Dworak, C.; Kopeinig, S.; Hoffmann, H.; Liska, R. J. Polym. Sci., Part A: Polym. Chem. 2008, 47, 392, nicht jedoch für Inkjet-Anwendungen genutzt. Der Vorteil der Verwendung dieser Verbindungen in Tintenstrahldrucktinten liegt darin, dass diese die Fotopolymerisation starten und in das Tintennetzwerk eingebaut werden. Durch diesen kovalenten Einbau des Initiators verbleiben keine extrahierbaren Initiatorabbauprodukte (z.B. Phosphinoxide, etc.) in der Tintenschicht, welche z.B. in biologischen Anwendungen zu Reizreaktionen führen können.

Diese fotoinitiierenden Monomere können in einem Anteil von 0.1 Gew.-% bis 25 Gew.-%, bzw. in einem Anteil von 1,5 Gew.-% bis 20 Gew.-% oder in einem Anteil von 1,5 Gew.-% bis 15 Gew.-% eingesetzt werden, wobei auch eine beliebige Mischung mit kommerziellen UV- und/oder thermischen Initiatoren, wie voranstehend beschrieben, also von Initatoren, die nicht kovalent gebunden werden, möglich ist. Werden fotoinitiierende Monomere als Mischung mit kommerziellen UV- und/oder thermischen Initiatoren in der erfindungsgemäßen Tintenstrahldrucktinte eingesetzt, so dient dies zur Vergrößerung des Vernetzungsgrades der Tintenstrahldrucktinten. Gleichzeitig können dadurch die Mengen an kommerziellen UV- und/oder thermischen Initiatoren verringert werden, was wiederum eine Minimierung von Initiatorabbauprodukten in den gehärteten Tintenschichten ermöglicht.

Diese fotoinitiierenden Monomere sind derzeit nicht kommerziell verfügbar, können jedoch auf Basis der voranstehend genannten veröffentlichten Synthesevorschriften präpariert werden. In diesem Zusammenhang ist zu erwähnen, dass durch entsprechende Alkoxylierung der photoinitiierenden Monomere auch wasserlösliche Derivate zugänglich sind.

Im Folgenden werden nun einige bevorzugte Beispiele der erfindungsgemäßen Ansätze zur Herstellung von Tintenstrahldrucktinten auf Basis von Vinylestern, Vinylcarbonaten und Vinylcarbamaten diskutiert. Aufgrund der zahlreichen Möglichkeiten an erfindungsgemäßen Ausführungen seien hier nur exemplarisch einige Beispiele angeführt, da dies sonst den Rahmen dieser Beschreibung sprengen würde.

Die Ausführungsbeispiele zeigen somit nur einige mögliche Ausführungsvarianten, wobei an dieser Stelle bemerkt sei, dass die Erfindung nicht auf die speziell beschriebenen Beispiele eingeschränkt ist, sondern vielmehr auch diverse Kombinationen der einzelnen Ausführungsvarianten untereinander möglich sind. Diese Variationsmöglichkeiten liegen aufgrund der Lehre zum technischen Handeln durch gegenständliche Erfindung im Können des auf diesem technischen Gebiet tätigen Fachmanns.

### Beispiel 1:

Einer kommerziellen Rußdispersion wurde eine äquimolare Mischung an Vinylbutyrat, Vinylneodecanoat, Vinylstearat, Vinylbenzoat, Vinyllaurat und N-Vinylcaprolactam zugesetzt, sodass ein Rußanteil von 6 Gew.-% erhalten wurde. Zur Steuerung der Tintenrheologie wurde eine Mischung von hochmolekularen Vinylcarbonaten des Ethylenglykols und Propylenglykols (sowohl mono- als auch difunktionalisiert) eingesetzt. Zur UV-Härtung dieser Inkjet-Tinte wurden 1.5 Gew.-% 2-Hydroxy-2-methylpropiophenon, 0.5 Gew.-% Irgacure 819 und 1 Gew.-% Benzophenon beigemengt.

### Beispiel 2:

Einer kommerziellen Rußdispersion wurde eine äquimolare Mischung an Vinylbutyrat, Vinylneodecanoat, Vinylstearat, Vinylbenzoat, Vinyllaurat und N-Vinylcaprolactam zugesetzt, sodass ein Rußanteil von 6 Gew.-% erhalten wurde. Zur Steuerung der Tintenrheologie wurde eine Mischung von hochmolekularen Vinylcarbonaten des Ethylenglykols und Propylenglykols (sowohl mono- als auch difunktionalisiert) eingesetzt. Zur thermischen Härtung dieser Inkjet-Tinte wurden 1.5 Gew.-% Azobisisobutyronitril und 1 Gew.-% Dibenzoylperoxid beigemengt.

### Beispiel 3:

Einer kommerziellen Dispersion an Kupferphthalocyanin wurde eine äquimolare Mischung an Vinylneodecanoat, Vinylbenzoat, Vinyllaurat, Vinylcarbonat-funktionalisiertes Furfuryl und N-Vinylcaprolactam zugesetzt, sodass ein Pigmentanteil von 5 Gew.-% erhalten wurde. Zur Steuerung der Tintenrheologie wurde eine Mischung von hochmolekularen Vinylcarbonaten und Vinylcarbamaten des Ethylenglykols und Propylenglykols (sowohl mono- als auch difunktionalisiert) eingesetzt. Zur Härtung dieser Inkjet-Tinte wurde eine Mischung aus 0.5 Gew.-% Azobisisobutyronitril, 0.2 Gew.-% Dibenzoylperoxid und 1.5 Gew.-% 2-Hydroxy-2-methylpropiophenon beigemengt.

### Beispiel 4:

Einer kommerziellen Dispersion an Titanoxid wurde eine äquimolare Mischung an Vinylneodecanoat, Vinylbenzoat, Vinyllaurat, Vinylcarbonat-funktionalisiertes 3-Morpholino-1,2-propandiol und Vinylcarbonat-funktionalisiertes Furfuryl zugesetzt, sodass ein Pigmentanteil von 9 Gew.-% erhalten wurde. Zur Steuerung der Tintenrheologie wurde eine Mischung von hochmolekularen Vinylcarbonaten des Ethylenglykols und Propylenglykols (sowohl mono- als auch difunktionalisiert) sowie unfunktionalisiertes Polyethylenglykol eingesetzt. Zur Härtung dieser Inkjet-Tinte wurde eine Mischung aus 0.5 Gew.-% Azobisisobutyronitril und 2.5 Gew.-% 2-Hydroxy-2-methylpropiophenon beigemengt.

### Beispiel 5:

Einer äquimolaren Mischung an Vinylbutyrat, Vinylneodecanoat, Vinylstearat, Vinylbenzoat, Vinyllaurat und N-Vinylcaprolactam wurde zur Steuerung der Tintenrheologie eine Mischung von hochmolekularen Vinylcarbonaten des Ethylenglykols und Propylenglykols (sowohl mono- als auch difunktionalisiert) zugesetzt. Zur UV-Härtung dieser farblosen Inkjet-Tinte wurden 0.5 Gew.-% 2-Hydroxy-2-methylpropiophenon und 4 Gew.-% *O,N,N*-Tris(carboxy-2-phenyl)hydroxylamin beigemengt.

### Beispiel 6:

Kommerziellem Bromchlorophenol-Blau wurde eine äquimolare Mischung an Vinylneodecanoat, Vinylbenzoat, Vinyllaurat, Vinylcarbonat-funktionalisiertes Furfuryl und N-Vinylcaprolactam zugesetzt, sodass eine gesättigte Farbstofflösung erhalten wurde. Nach Abfiltration allfälliger fester Rückstände wurde zur Steuerung der Tintenrheologie eine Mischung von hochmolekularen Vinylcarbonaten und Vinylcarbamaten des Ethylenglykols und Propylenglykols (sowohl mono- als auch difunktionalisiert) eingesetzt. Zur Härtung dieser Inkjet-Tinte wurde eine Mischung aus 0.5 Gew.-% Azobisisobutyronitril, 0.2 Gew.-% Dibenzoylperoxid und 1.5 Gew.-% 2-Hydroxy-2-methylpropiophenon beigemengt.

### Beispiel 7:

Einer kommerziellen Dispersion eines Magenta-färbigen Pigments wurde eine Mischung von hochmolekularen Vinylestern und Vinylcarbonaten des Ethylenglykols und Propylenglykols (sowohl mono- als auch difunktionalisiert im Mischverhältnis 1:3) zugesetzt. Zur UV-Härtung dieser Inkjet-Tinte wurden 1.5 Gew.-% Irgacure 819 beigemengt.

### Beispiel 8:

Einer kommerziellen Dispersion eines gelben Pigments wurde eine Mischung an Vinylcarbonat-funktionalisierten Derivaten des 1,6-Hexandiols, 1,2-Tetradecandiols, 2,2,4-Trimethyl-1,3-pentandiols, 3-Morpholino-1,2-propandiols und ethoxylierten Bisphenol A zugesetzt (Mischverhältnis: 1 : 2.5 : 0.7 : 3 : 5). Zur UV-Härtung dieser Inkjet-Tinte wurden 1.5 Gew.-% 2-Hydroxy-2-methylpropiophenon und 1 Gew.-% Benzophenon beigemengt..

### Beispiel 9:

Einer kommerziellen Dispersion eines cyan-färbigen Pigments wurde eine Mischung aus Vinylester-funktionalisierten Derivaten der 1,3-Adamantandiessigsäure, 1,3-Cyclohexandicarbonsäure und Dodecandisäure zugesetzt (Mischverhältnis: 1 : 0.2 : 3). Zur Einstellung der Tintenrheologie wurde Vinylcarbonat-funktionalisiertes, ethoxyliertes Bisphenol A verwendet. Zur Härtung dieser Inkjet-Tinte wurde eine Mischung aus 0.5 Gew.-% Azobisisobutyronitril und 2.5 Gew.-% 2-Hydroxy-2-methylpropiophenon beigemengt.

## Patentansprüche

1. Tintenstrahldrucktinte umfassend zu (Meth)acrylaten alternative polymerisierbare Monomere und/oder Oligomere in einem Gesamtanteil, der aus einem Bereich von 15 Gew.-% bis 99 Gew.-% ausgewählt ist, und gegebenenfalls zumindest einen Initiator, wobei die Monomere und/oder Oligomere zumindest zu 65 Gew.-%, vorzugsweise ausschließlich, durch zumindest eine, bevorzugt radikalisch polymerisierbare, vinylbasierende Verbindung gebildet sind, oder dass die Monomere und/oder Oligomere zumindest teilweise, bevorzugt ausschließlich, durch zumindest eine vinylbasierende Verbindung gebildet sind und der Initiator durch Monomere gebildet ist, die mit der zumindest einen vinylbasierenden Verbindung im Zuge deren Polymerisation unter Ausbildung einer kovalenten Bindung zu dieser reagieren, **dadurch gekennzeichnet, dass** die zumindest eine vinylbasierende Verbindung aus der Gruppe bestehend aus Vinylestern, Vinylcarbonaten, Vinylcarbamaten, sowie Derivaten davon und Mischungen daraus ausgewählt ist.

2. Tintenstrahldrucktinte nach Anspruch 1, **dadurch gekennzeichnet, dass** der Gesamtanteil der Monomere und/oder Oligomere aus einem Bereich von 80 Gew.-% bis 99 Gew.-% ausgewählt ist.

3. Tintenstrahldrucktinte nach einem der Ansprüche 1 oder 2, **dadurch gekennzeichnet, dass** mehrere vinylbasierende Verbindungen aus einer Mischung von Vinylbutyrat, Vinylneodecanoat, Vinylstearat, Vinylbenzoat, Vinyllaurat und N-Vinylcaprolactam enthalten sind.

4. Tintenstrahldrucktinte nach einem der Ansprüche 1 oder 2, **dadurch gekennzeichnet, dass** mehrere vinylbasierende Verbindungen aus einer Mischung von Vinylneodecanoat, Vinylbenzoat, Vinyllaurat, Vinylcarbonat-funktionalisiertes Furfuryl und N-Vinylcaprolactam enthalten sind.

5. Tintenstrahldrucktinte nach einem der Ansprüche 1 oder 2, **dadurch gekennzeichnet, dass** mehrere vinylbasierende Verbindungen aus einer Mischung von Vinylneodecanoat, Vinylbenzoat, Vinyllaurat, Vinylcarbonat-funktionalisiertes 3-Morpholino-1,2-propandiol und Vinylcarbonat-funktionalisiertes Furfuryl enthalten sind.

6. Tintenstrahldrucktinte nach einem der Ansprüche 3 bis 5, **dadurch gekennzeichnet, dass** die mehreren vinylbasierenden Verbindungen in zumindest annähernd äquimolaren Anteilen enthalten sind.

7. Tintenstrahldrucktinte nach einem der Ansprüche 1 bis 6, **dadurch gekennzeichnet, dass** die zumindest eine vinylbasierende Verbindung zumindest eine zusätzliche funktionelle Gruppe aufweist.

8. Tintenstrahldrucktinte nach Anspruch 7, **dadurch gekennzeichnet, dass** die zumindest eine vinylbasierende Verbindung hinsichtlich des Vinylierungsgrades mono-, di-, tri-, tetra-, penta- oder hexafunktionalisiert ist.

9. Tintenstrahldrucktinte nach Anspruch 7 oder 8, **dadurch gekennzeichnet, dass** die zumindest eine zusätzliche funktionelle Gruppe durch einen Glykolrest, eine Furfuryl-Gruppe, einen Morpholinrest oder einen Bisphenolrest gebildet ist.

10. Tintenstrahldrucktinte nach einem der Ansprüche 1 bis 9, **dadurch gekennzeichnet, dass** diese zumindest ein Tensid in einem Anteil ausgewählt aus einem Bereich von 0,5 Gew.-% bis 25 Gew.-% enthält.

11. Tintenstrahldrucktinte nach einem der Ansprüche 1 bis 10, **dadurch gekennzeichnet, dass** diese zumindest einen Entschäumer in einem Anteil ausgewählt aus einem Bereich von 0,1 Gew.-% bis 10 Gew.-% enthält.

12. Tintenstrahldrucktinte nach einem der Ansprüche 1 bis 11, **dadurch gekennzeichnet, dass** der Fotoinitiator ein Derivat des Di- und Triacryloylhydroxylamins oder ein Derivat des Diacrylamids ist.

13. Tintenstrahldrucktinte nach einem der Ansprüche 1 bis 12, **dadurch gekennzeichnet, dass** der Initiator in einem Anteil ausgewählt aus einem Bereich von 0,1 Gew.-% bis 25 Gew.-% enthalten ist.

14. Tintenstrahldrucktinte nach einem der Ansprüche 1 bis 13, **dadurch gekennzeichnet, dass** ein Anteil des Initiators durch zumindest einen weiteren Fotoinitiator und/oder thermischen Initiator ersetzt ist, der durch Moleküle gebildet ist, die nach der Polymerisation der zumindest einen vinylbasierenden Verbindung ungebunden in der Tinte verbleiben.

15. Verwendung von zu (Meth)acrylaten alternativen polymerisierbaren Monomeren und/oder Oligomeren zumindest einer Vinylverbindung, die zumindest zu 65 Gew.-%, vorzugsweise ausschließlich, durch die zumindest eine vinylbasierende Verbindung gebildet sind, zur Herstellung einer Tintenstrahldrucktinte, wobei der Gesamtanteil der Monomere und/oder Oligomere an der Tintenstrahldrucktinte ausgewählt ist aus einem Bereich von 15 Gew.-% bis 99 Gew.-%, **dadurch gekennzeichnet, dass** die Vinylverbindung aus einer Gruppe bestehend aus Vinylester, Vinylcarbonate, Vinylcarbamate, sowie Derivate davon und Mischungen daraus gebildet ist.

## Claims

1. Ink-jet printer ink comprising, as an alternative to (meth)acrylates, polymerizable monomers and/or oligomers in a total proportion selected from a range of 15% by weight to 99% by weight, and optionally at least one initiator, wherein at least up to 65% by weight, preferably all, of the monomers and/or oligomers are formed by at least one vinyl-based compound, which is preferably radically polymerizable, or at least a portion, preferably all, of the monomers and/or oligomers are formed by at least one vinyl-based compound and the initiator is formed by monomers which react with the at least one vinyl-based compound during polymerization thereof to form a covalent bond therewith, **characterized in that** the at least one vinyl-based compound is selected from the group consisting of vinyl esters, vinyl carbonates and vinyl carbamates, as well as derivatives thereof and mixtures thereof.

2. The ink-jet printer ink as claimed in claim 1, **characterized in that** the total proportion of the monomers and/or oligomers is selected from a range of 80% by weight to 99% by weight.

3. The ink-jet printer ink as claimed in one of claims 1 or 2, **characterized in that** it contains a plurality of vinyl-based compounds formed by a mixture of vinyl butyrate, vinyl neodecanoate, vinyl stearate, vinyl benzoate, vinyl laurate and N-vinyl caprolactam.

4. The ink-jet printer ink as claimed in one of claims 1 or 2, **characterized in that** it contains a plurality of vinyl-based compounds formed by a mixture of vinyl neodecanoate, vinyl benzoate, vinyl laurate, vinyl carbonate-functionalized furfuryl and N-vinyl caprolactam.

5. The ink-jet printer ink as claimed in one of claims 1 or 2, **characterized in that** it contains a plurality of vinyl-based compounds formed by a mixture of vinyl neodecanoate, vinyl benzoate, vinyl laurate, vinyl carbonate-functionalized 3-morpholino-1,2-propanediol and vinyl carbonate-functionalized furfuryl.

6. The ink-jet printer ink as claimed in one of claims 3 to 5, **characterized in that** the plurality of vinyl-based compounds contained therein are in at least approximately equimolar proportions.

7. The ink-jet printer ink as claimed in one of claims 1 to 6, **characterized in that** the at least one vinyl-based compound comprises at least one additional functional group.

8. The ink-jet printer ink as claimed in claim 7, **characterized in that** the at least one vinyl-based compound is mono-, di-, tri-, tetra-, penta- or hexa-functionalized in terms of the degree of vinylation.

9. The ink-jet printer ink as claimed in claim 7 or claim 8, **characterized in that** the at least one additional functional group is formed by a glycol residue, a furfuryl group, a morpholino residue or a bisphenol residue.

10. The ink-jet printer ink as claimed in one of claims 1 to 9, **characterized in that** it contains at least one surfactant in a proportion selected from a range of 0.5% by weight to 25% by weight.

11. The ink-jet printer ink as claimed in one of claims 1 to 10, **characterized in that** it contains at least one anti-foaming agent in a proportion selected from a range of 0.1% by weight to 10% by weight.

12. The ink-jet printer ink as claimed in one of claims 1 to 11, **characterized in that** the photoinitiator is a derivative of di- and triacryloylhydroxylamine or a derivative of diaciylamide.

13. The ink-jet printer ink as claimed in one of claims 1 to 12, **characterized in that** the initiator it contains is in a proportion selected from a range of 0.1% by weight to 25% by weight.

14. The ink-jet printer ink as claimed in one of claims 1 to 13, **characterized in that** a proportion of the initiator is replaced by at least one further photoinitiator and/or thermal initiator formed by molecules which remain unbound in the ink after polymerization of the at least one vinyl-based compound.

15. Use, as an alternative to (meth)acrylates, of polymerizable monomers and/or oligomers of at least one vinyl compound at least 65% by weight of which, preferably all of which, is formed by the at least one vinyl-based compound, for the manufacture of an ink-jet printer ink, wherein the total proportion of the monomers and/or oligomers in the ink-jet printer ink is selected from a range of 15% by weight to 99% by weight, **characterized in that** the vinyl compound is selected from a group consisting of vinyl ester, vinyl carbonate, vinyl carbamate, as well as derivatives thereof and mixtures thereof.

## Revendications

1. Encre d'impression à jet d'encre comprenant des monomères et/ou oligomères polymérisables alternatifs aux (méth)acrylates, dans une proportion totale choisie dans une plage allant de 15 % en poids à 99 % en poids, et, le cas échéant, un initiateur, les monomères et/ou oligomères étant formés à au moins 65 % en poids, de préférence entièrement, par au moins un composé chimique à base de vinyle, de préférence polymérisable par polymérisation radicalaire, ou que le monomères et/ou oligomères sont formés au moins partiellement, de préférence exclusivement, par au moins un composé chimique à base de vinyle et que l'initiateur est formé par des monomères qui réagissent avec la (ou les) composé(s) chimique(s) à bas de vinyle dans le cadre de leur polymérisation en formant une liaison covalente par rapport à celui-ci, **caractérisé en ce que** le (ou les) composé(s) chimique(s) à base de vinyle est/sont choisi(s) dans le groupe formé par des esters de vinyle, des carbonates de vinyle, des carbamates de vinyle, des dérivés de ceux-ci et des mélanges de ceux-ci.

2. Encre d'impression à jet d'encre selon la revendication 1, **caractérisé en ce que** la proportion totale des monomères et/ou oligomères est choisie dans une plage allant de 80 % en poids à 99 % en poids.

3. Encre d'impression à jet d'encre selon la revendication 1 ou 2, **caractérisé en ce qu'**elle comprend plusieurs composés à base de vinyle issus d'un mélange de butyrate de vinyle, neodecanoate de vinyle, stéarate de vinyle, benzoate de vinyle, laurate de vinyle et caprolactame N de vinyle.

4. Encre d'impression à jet d'encre selon l'une des revendications 1 ou 2, **caractérisé en ce qu'**elle comprend plusieurs composés à base de vinyle issus d'un mélange de neodecanoate de vinyle, benzoate de vinyle, laurate de vinyle, furfuryle fonctionnalisé en carbonate de vinyle et caprolactame N de vinyle.

5. Encre d'impression à jet d'encre selon l'une des revendications 1 ou 2, **caractérisé en ce qu'**elle comprend plusieurs composés à base de vinyle issus d'un mélange de neodecanoate de vinyle, benzoate de vinyle, laurate de vinyle, 3-morpholino-1,2-propandiol fonctionnalisé en carbonate de vinyle et furfuryle fonctionnalisé en carbonate de vinyle.

6. Encre d'impression à jet d'encre selon l'une quelconque des revendications 3 à 5, **caractérisé en ce que** les différents composés à base de vinyle sont présents en des proportions au moins approximativement équimolaires.

7. Encre d'impression à jet d'encre selon l'une quelconque des revendications 1 à 6, **caractérisé en ce que** le (ou les) composé(s) chimique(s) à base de vinyle comprend/comprennent au moins un groupe fonctionnel supplémentaire.

8. Encre d'impression à jet d'encre selon la revendication 7, **caractérisé en ce que** le (ou les) composé(s) chimique(s) à base de vinyle est/sont, en ce qui concerne leur degré de vinylisation, mono, di, tri, tétra, penta ou hexa fonctionnalisé(s).

9. Encre d'impression à jet d'encre selon la revendication 7 ou 8, **caractérisé en ce que** le (ou les) groupe(s) fonctionnel(s) supplémentaire(s) est(sont formé(s) par un radical de glycol,un groupe furfuryle, un radical de morpholine ou un radical de bisphénole.

10. Encre d'impression à jet d'encre selon l'une quelconque des revendications 1 à 9, **caractérisé en ce qu'**elle comprend au moins un tensio-actif dans une proportion choisie dans une plage de 0,5 % en poids à 25 % en poids.

11. Encre d'impression à jet d'encre selon l'une quelconque des revendications 1 à 10, **caractérisé en ce qu'**elle comprend au moins un démoussant dans une proportion choisie dans une plage de 0,1 % en poids à 10 % en poids.

12. Encre d'impression à jet d'encre selon l'une quelconque des revendications 1 à 11, **caractérisé en ce que** le photo-initiateur est un dérivé de l'hydroxylamine de di- ou triacryloyie ou un dérivé de diacrylamine.

13. Encre d'impression à jet d'encre selon l'une quelconque des revendications 1 à 12, **caractérisé en ce que** l'initiateur est choisi dans une proportion allant de 0,1 % en poids à 25 % en poids.

14. Encre d'impression à jet d'encre selon l'une quelconque des revendications 1 à 13, **caractérisé en ce qu'**une partie de l'initiateur est remplacée par au moins un autre photo-initiateur et/ou un initiateur thermique formé par des molécules qui restent dans l'encre après la polymérisation du (ou des) composé(s) à base de vinyle de manière libre.

15. Utilisation de monomères et/ou oligomères polymérisables alternatifs aux (méth)acrylates d'au moins un composé de vinyle qui est/sont formé(s), à au moins 65 % en poids, de préférence exclusivement, par le (ou les) composé(s) à base de vinyle, pour la préparation d'un encre d'impression à jet d'encre, la proportion totale des monomères et/ou oligomères dans l'encre d'impression à jet d'encre étant choisi ans une plage allant de 15 % en poids à 99 % en poids, **caractérisé en ce que** le composé de vinyle est formé d'un groupe formé par des esters de vinyle, des carbonates de vinyle, des carbamates de vinyle, des dérivés de ceux-ci et des mélanges de ceux-ci.
